Europäisches Patentamt

European Patent Office

Office européen des brevets

(19)

(11) Numéro de publication: **0 063 979**
**B1**

(12) **FASCICULE DE BREVET EUROPEEN**

(45) Date de publication du fascicule du brevet: **10.06.87**

(51) Int. Cl.⁴: **B 64 C 15/14, F 42 B 15/033**

(21) Numéro de dépôt: **82400633.2**

(22) Date de dépôt: **06.04.82**

(54) **Dispositif de pilotage par jets de gaz, et projectile comprenant un tel dispositif.**

(30) Priorité: **21.04.81 FR 8107915**

(43) Date de publication de la demande:
**03.11.82 Bulletin 82/44**

(45) Mention de la délivrance du brevet:
**10.06.87 Bulletin 87/24**

(84) Etats contractants désignés:
**AT BE CH DE GB IT LI LU NL SE**

(56) Documents cités:
**DE-A-2 815 087**
**DE-B-1 232 030**
**DE-B-1 291 206**
**DE-C- 568 066**
**GB-A-1 073 075**
**US-A-2 726 510**
**US-A-3 245 620**
**US-A-3 273 825**
**US-A-3 927 693**

(73) Titulaire: **THOMSON BRANDT ARMEMENTS
52, avenue des Champs Elysées
F-75008 Paris (FR)**

(72) Inventeur: **Metz, Pierre
THOMSON-CSF SCPI 173, bld Haussmann
F-75360 Paris Cedex 08 (FR)**

(74) Mandataire: **Trocellier, Roger et al
THOMSON-CSF SCPI 19, avenue de Messine
F-75008 Paris (FR)**

Courier Press, Leamington Spa, England.

EP 0 063 979 B1

## Description

L'invention concerne un dispositif de pilotage mettant en oeuvre des jets de gaz qui créent des forces de poussée selon des directions déterminées par des ordres de guidage; elle concerne également un projectile équipé d'un tel dispositif.

Un dispositif de pilotage par jets de gaz, destiné, plus spécifiquement, à modifier la trajectoire de vol d'un projectile ou missile, comprend notamment un jeu de tuyères fixes disposées en couronne à la périphérie du corps du projectile et une source primaire d'énergie qui génère un flux de gaz, généralement avec un débit continu. Entre les entrées des tuyères d'éjection du flux de gaz et la sortie de la source de gaz, sont disposés des moyens permettant d'aiguiller le flux de gaz dans l'une ou simultanément dans plusieurs des tuyères en accord avec les ordres de guidage disponibles à bord du projectile. En outre, dans certaines applications, il est souhaitable de disposer simultanément d'une force de poussée longitudinale assurant le maintient de la vitesse de croisière du projectile et une force transversale permettant de modifier la direction de vol de ce projectile.

Il est connu, notamment par le brevet allemand DE—A—2 815 087 déposé au nom de la Demanderesse, de réaliser un dispositif de pilotage par jets de gaz dans lequel des moyens de distribution ou d'aiguillage sont prévus pour diriger le flux de gaz vers des tuyères d'éjection déterminées. Selon un premier mode de réalisation décrit, correspondant à un plan unique de pilotage, le dispositif comprend deux tuyères fixes diamétralement opposées; le moyen de distribution est constitué par une palette mobile disposée dans les conduits divergents d'alimentation en flux de gaz des tuyères; cette palette mobile est articulée autour d'un axe perpendiculaire au plan contenant les tuyères et elle est actionnée par un vérin pneumatique afin de basculer alternativement vers une tuyère ou l'autre. Selon un second mode de réalisation décrit dans ce brevet, le dispositif de pilotage comprend un jeu de quatre tuyères fixes diamétralement opposées par paire, chacun des couples de tuyères étant situé dans les deux plans orthogonaux de pilotage; le moyen de distribution du flux de gaz est une palette à quatre branches articulées sur une rotule centrale et disposée dans les conduits divergents d'alimentation en flux de gaz des tuyères, de manière que deux tuyères adjacentes soient simultanément ouvertes tandis que les deux autres tuyères demeurent obturées.

Le dispositif de pilotage selon l'invention se rapporte plus particulièrement à ce second mode de réalisation fourni par l'art antérieur qui présente les inconvénients suivants: d'une part, la force de poussée tranversale résulte de la somme géométrique de deux forces élémentaires orthogonales avec pour conséquence une pénalité de poids sur le générateur du flux de gaz et, d'autre part, la fabrication de la palette à quatre branches articulée sur une rotule soulève des difficultés technologiques.

Le but de l'invention est d'éliminer les inconvénients précités, lesquels sont inhérents aux dispositifs de pilotage par jets de gaz de l'art antérieur.

Par rapport au document DE—A—2815087 qui décrit déja un dispositif de pilotage qui comprend un élément annulaire définissant un axe longitudinal muni d'un nombre N de tuyères d'éjection inclinées par rapport audit axe longitudinal pour fournir conjointement des forces de poussée longitudinale et transversale, et une source d'énergie fournissant un flux de gaz à l'entrée d'un moyen d'aiguillage alimentant les tuyères d'éjection, l'invention est caractérisée en ce que le moyen d'aiguillage est un élément rotatif, disposé coaxialement dans l'élément annulaire et tournant autour de l'axe longitudinal, ledit élément rotatif comportant un nombre M de conduits de gaz différent du premier nombre N et des moyens de positionnement qui comprennent un moyen de mise en rotation de cet élément rotatif par le flux de gaz qui le traverse et un moyen d'arrêt sur N fois M positions stables prédéterminées pour chacune desquelles une seule des N tuyères est en communication avec l'un des M conduits les N-1 autres tuyères étant obturées.

Un autre object de l'invention est un dispositif de pilotage dans lequel la rotation de l'élément rotatif ne perturbe pas, de façon significative, le débit du flux de gaz fourni par la source.

D'autres caractéristiques et avantages que procure l'invention apparaîtront dans la description détaillée qui va suivre, fait en regard des figures annexées; sur ces figures:

— la figure 1a représente, sous une forme schématique simplifiée, une vue transversale du dispositif de pilotage selon l'invention,

— la figure 1b représente, sous une forme schématique simplifiée, une vue longitudinale du dispositif de pilotage selon l'invention,

— la figure 1c représente, sous une forme graphique, la position relative des tuyères d'éjection et des canaux de passage des gaz en fonction de la position angulaire 0 de l'élément rotatif,

— la figure 1d donne, sous une forme tabulaire, les séquences d'ouverture des tuyères d'éjection,

— la figure 2a représente, selon une vue en coupe longitudinale, un mode de réalisation d'un dispositif de pilotage selon l'invention,

— la figure 2b représente les détails de réalisation du disque cranté des moyens de positionnement de l'élément rotatif,

— la figure 2c représente une vue en perspective de l'émément rotatif,

— la figure 3a représente, selon une vue en coupe longitudinale, une variante de réalisation du dispositif de pilotage de la figure 2a,

— la figure 3b représente les détails de réalisation de l'élément rotatif,

— la figure 3c représente les détails de réalisation du disque cranté des moyens de positionnement de l'élément rotatif,

— la figure 4 représente, selon une vue en coupe, un projectile guidé comprenant un dispositif de pilotage selon l'invention,

— la figure 5 représente, selon une vue en coupe longitudinale, un dispositif de pilotage comprenant un unique générateur de gaz.

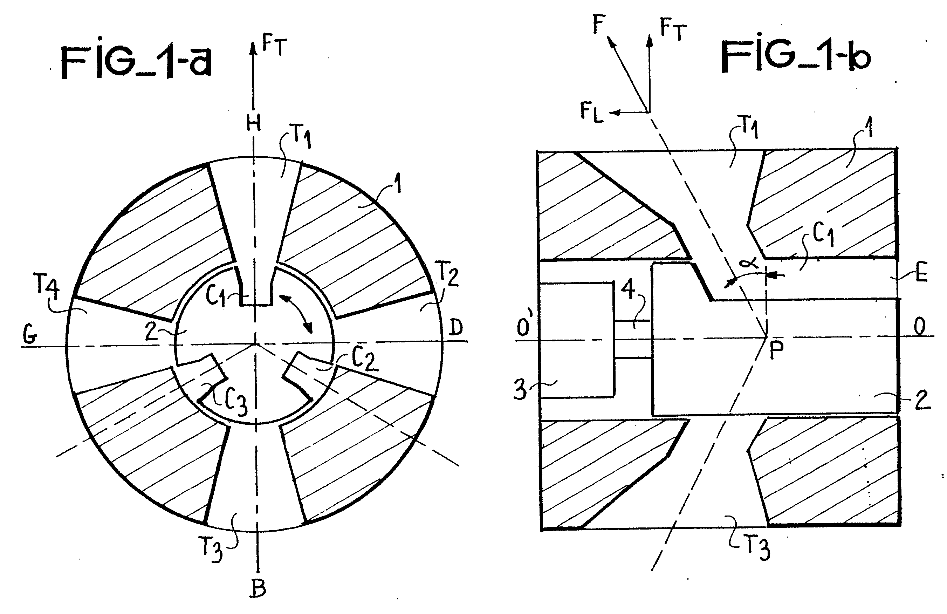

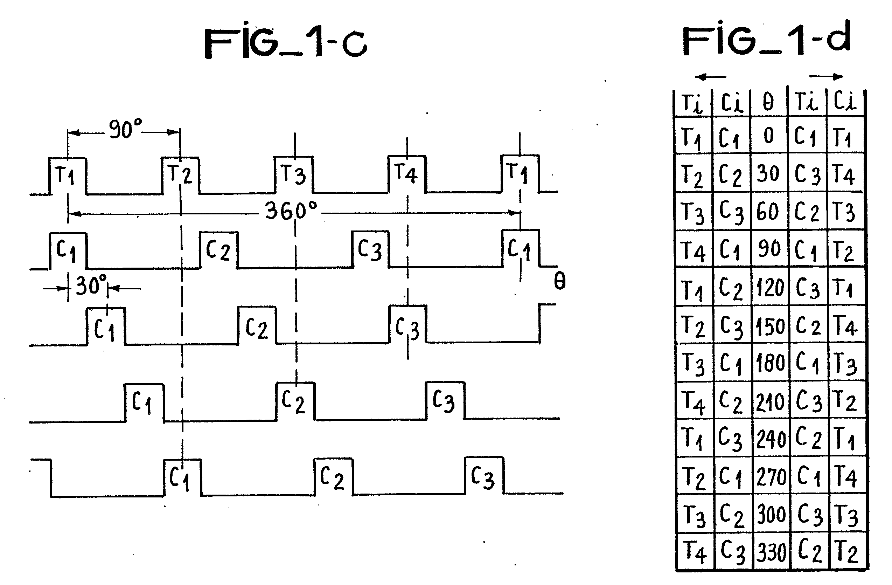

Sur les figures 1a et 1b, on a représenté, sous une forme schématique simplifiée, respectivement selon des vues en coupe longitudinale et transversale, un dispositif de pilotage par jets de gaz suivant l'invention; ce dispositif comprenant les éléments suivants:

— un élément annulaire 1 muni de quatre tuyères fixes $T_1$ à $T_4$, toutes identiques, régulièrement espacées pour former deux couples de tuyères, chacun des couples étant contenu dans les plans respectifs de pilotage H-B et D-G; la direction de la force de poussée Fde ces tuyères pouvant être inclinée d'un angle a,

— un élément rotatif 2 placé coaxialement à l'intérieur de l'élément annulaire 1 et comportant trois canaux $C_1$ à $C_3$ de passage du flux de gaz dont les entrées communes E sont alimentées par le flux de gaz fourni par un générateur de gaz non représenté; cet élément rotatif est libre de tourner dans les deux sens indiqués par la flèche double, autour de l'axe longitudinal 0, 0' du dispositif et l'espacement angulaire relatif de ces canaux de passage du flux de gaz étant constant,

— un moyen de positionnement 3 qui permet de positionner l'élément rotatif 2 suivant douze directions pour ouvrir séquentiellement l'une des quatre tuyères et obturer les trois autres; ce moyen de positionnement est solidaire de l'élément annulaire 2 et est accouplé à l'élément rotatif par un axe longitudinal 4.

Sur les figures 1a et 1b, on voit que, pour la position angulaire relative représentée de l'élément rotatif 2 et de la tuyère $T_1$, la totalité du flux de gaz traverse le canal $C_1$ et cette tuyère $T_1$; il en résulte une force de poussée F oblique appliquée au point P situé sur l'axe longitudinal 0, 0' du dispositif; les composantes $F_L$ et $F_T$ de cette force F correspondant respectivement aux forces de poussée longitudinale et transversale.

La figure $1_c$ représente, sous une forme graphique, la position angulaire relative des tuyères d'éjection $T_1$ à $T_4$ et des canaux $C_1$ à $C_3$ de passage du flux de gaz en fonction de la position angulaire θ de l'élément rotatif. L'espacement angulaire relatif des tuyères est égal à 90° et l'espacement angulaire relatif des canaux est égal à 120°. Si l'on considère les deux sens de rotation possibles de l'élément rotatif 2, les séquences d'ouverture des tuyères en fonction de la position angulaire de l'élément rotatif sont données sous une forme tabulaire à la figure 1d.

D'une manière générale, l'écartement angulaire des tuyères est égale à $2\pi/N$ si N est le nombre de tuyères et l'espacement angulaire relatif des canaux est égal à $2\pi/M$ si M est le nombre de canaux. On peut montrer que M et N étant des nombres entiers différents et, pour certaines valeurs particulières de M et N, une rotatif d'un angle $2\pi/MN$ de l'élément rotatif assure l'ouverture de la tuyère adjacente. En particulier, la valeur de M peut différer d'une unité de la valeur de N; dans l'exemple ci-dessus pour lequel N est égal à quatre, toutefois, M peut prendre les valeurs suivantes; 3, 5, 7, 9, 11, etc.

Dans le cas de l'utilisation d'un générateur de gaz dans lequel la source d'énergie est un propergol solide situé dans une chambre de combustion, il est souhaitable que le débit du flux de gaz ne soit pas perturbé par la rotation de l'élément rotatif, pour ce faire, il est nécessaire que les ouvertures angulaires de l'entrée des tuyères et la sortie des canaux soient égales à la valeur $2\pi/MN$. L'angle d'inclinaison de la direction de la force de poussée F permet, lors de la construction, de fixer le rapport des forces longitudinale $F_L$ et transversale $F_T$ fournies par le dispositif de pilotage. Les moyens de positionnement 3 de l'élément rotatif 2 peuvent être du type électrique, hydraulique, ou pneumatique et, dans ce dernier type, emprunter leur énergie de fonctionnement au flux de gaz traversant.

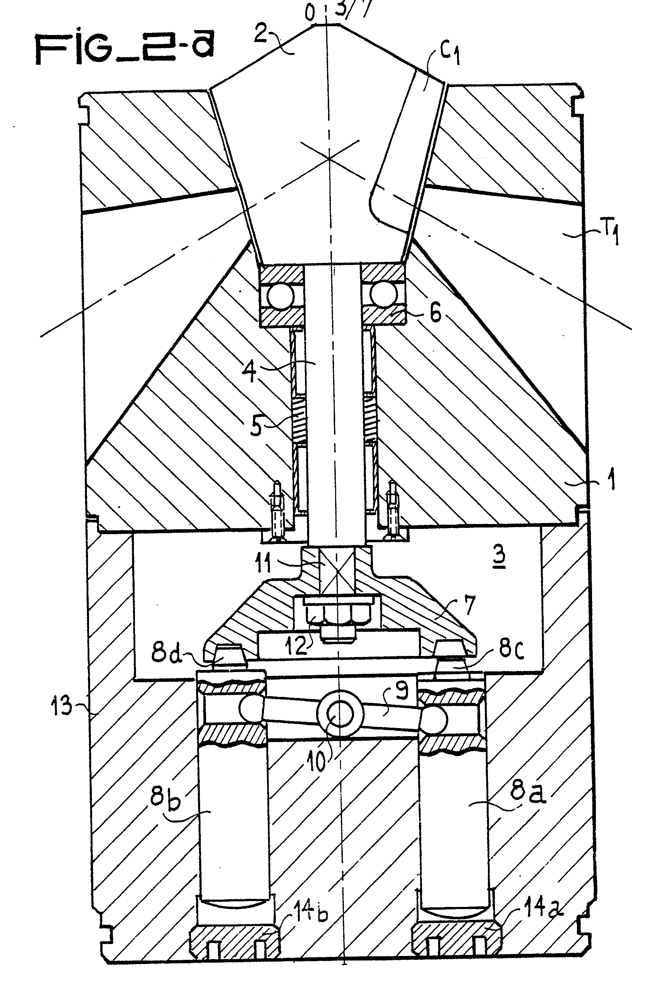

La figure 2a représente, selon une vue en coupe longitudinale, un mode de réalisation du dispositif de pilotage déjà décrit aux figures 1a à 1c; sur cette figure 2a, le générateur de gaz qui ne fait pas partie de l'invention n'est pas représenté et ne sera pas décrit comme connu en soi. Ce dispositif de pilotage comprend un élément annulaire massif 1 muni de quatre tuyères d'éjection mutuellement orthogonales et, seules, les deux tuyères diamétralement opposées apparaissent sur la figure. L'élément rotatif 2 est disposé coaxialement dans l'élément annulaire 1 et comporte trois canaux de passage des gaz, seul le canal $C_1$ apparaissant sur la figure; la sortie de ce canal $C_1$ est en coincidence avec l'entrée de la tuyère $T_1$, les trois autres tuyères $T_2$ à $T_4$ étant obturées par l'élément rotatif du fait que l'espacement angulaire relatif des canaux est égal à 120°; l'élément rotatif 2 comprend également un axe de sortie 4, libre de tourner à l'intérieur d'un palier 5. L'élément rotatif est maintenu en butée, sous l'effort de la pression du gaz traversant, sur une butée à billes 6. Les moyens de positionnement 3 de l'élément rotatif 2 comprennent un moyen d'entraînement en rotation fourni par les canaux de passage du flux de gaz, comme il sera décrit ultérieurement, et un mouen d'arrêt suivant douze directions, fourni par un mécanisme d'échappement comprenant un disque cranté 7 et un couple de vérins pnematiques 8a et 8b à simple effet synchronisé par une biellette 9 articulée autour d'un axe 10 perpendiculaire à l'axe longitudinal 0, 0' du dispositif; ces vérins sont munis de doigts 8c et 8d pouvant s'engager dans le crantage du disque 7. La position relative du disque cranté 7 et l'élément rotatif est parfaitement référencée par l'intermédiaire d'un emboitement 11 et le disque est maintenu solidaire de l'axe de sortie 4 par un écrou fileté 12. Les vérins pneumatiques 8a et 8b sont physiquement solidaires de l'élément annulaire 1 par l'intermédiaire d'un élément cylindrique massif 13 qui est emboîté et positionné correctement sur cet élément annulaire. Dans cet élément cylindrique 13 porte-vérins sont ménagés des logements pour les vérins 8a et 8b, ces logements étant fermés par des bouchons hermétiques 14a et 14b. Les vérins pneumatiques peuvent être commandés par des électrovannes classiques et l'énergie de fonctionnement peut être empruntée au flux de gaz traversant. Les organes de commande des vérins, comme connu en soi, ne seront pas décrits plus largement.

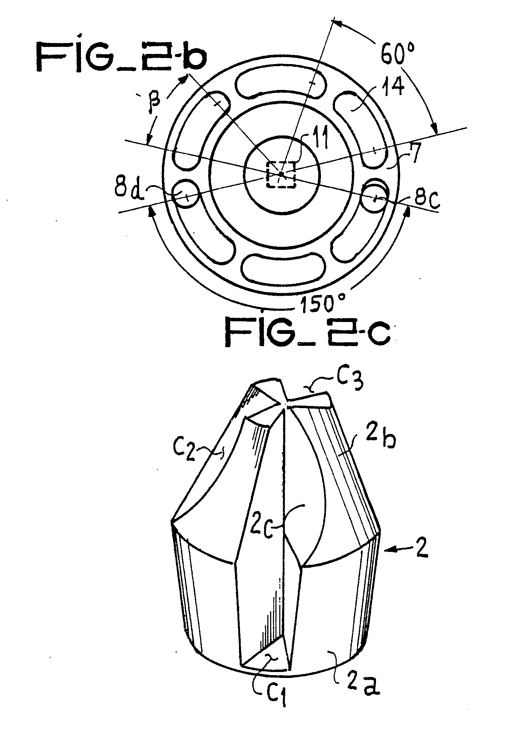

La figure 2b représente un mode de réalisation du crantage du disque 7. Ce disque comporte dix empreintes creuses 14 de forme circulaire, toutes identiques et également espacées angulairement d'un angle égal à 60°, l'ouverture angulaire $\beta$ de ces empreintes étant sensiblement supérieure à un angle de 30°. Les doigts 8c et 8d des vérins pneumatiques sont espacés angulairement d'un angle égal à 150°, de façon à fournir douze positions d'arrêt de l'élément rotatif.

La figure 2c représente une vue en perspective de l'élément rotatif 2, montrant plus particulièrement un mode de réalisation des canaux de passage du gaz. Cet élément rotatif est formé de deux parties troncôniques 2a et 2b, la partie 2a se trouvant en regard des entrées des tuyères d'éjection, et la partie 2b constituant notamment l'entrée commune des canaux des gaz. Dans cet exemple de réalisation, les canaux $C_1$ à $C_3$ ont une section triangulaire et comportent, à leur entrée, un méplat $2_c$ qui, sous l'action de la pression du flux de gaz, crée une force de rotation de direction prédéterminée avec, pour conséquence, une séquence unidirectionnelle d'ouverture des tuyères.

L'élément annulaire 1 et l'élément rotatif 2 doivent être réalisés en un matériau réfractaire et résistant à l'érosion du flux de gaz, par exemple, en un matériau tel que le graphite ou le molybdène. L'élément porte-vérins 13 peut être réalisé en acier ou encore en alliage léger, à condition de traiter correctement les logements des vérins pneumatiques $8_a$ et $8_b$.

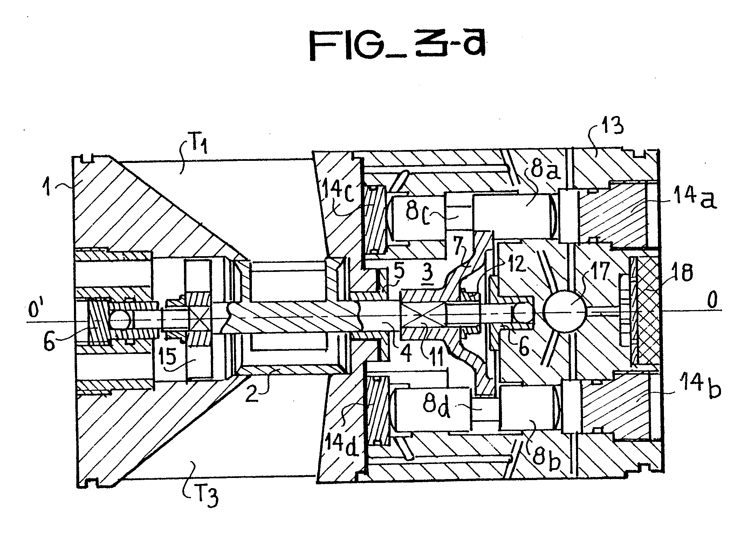

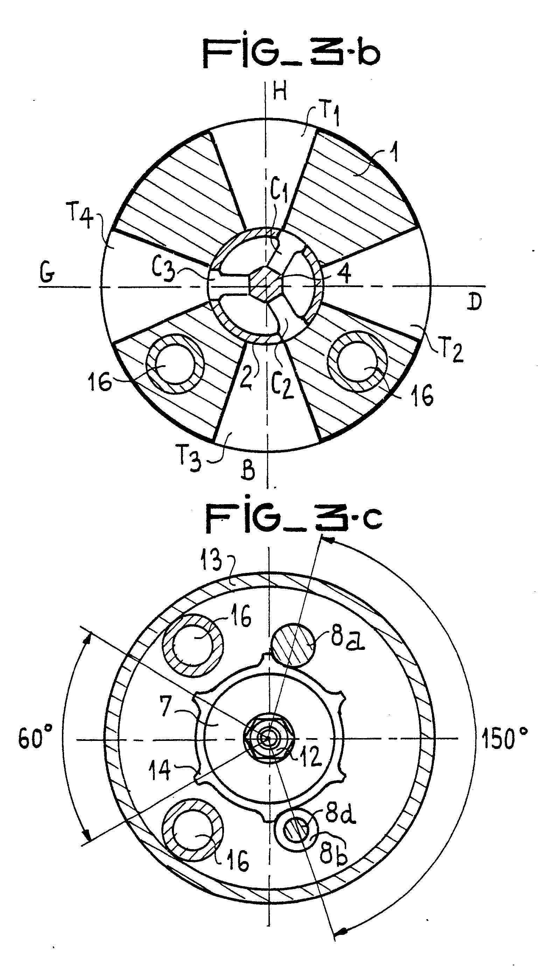

La figure 3a représente une variante de réalisation du dispositif de pilotage décrit aux figures 2a à 2c. Comme indiqué précédemment, le dispositif comprend: l'élément annulaire 1 muni de ses quatre tuyères d'éjection et l'élément rotatif 2 monté coaxialement dans cet élément annulaire.

Selon cette variante de réalisation, l'élément rotatif 2 est traversé par l'axe 4 qui est monté dans un palier 5 et maintenu par deux butées à billes 6; de plus, le moyen de mise en rotation de cet élément rotatif est fourni par une turbine 15 et le moyen d'arrêt sur les MN positions est fourni par une roue crantée en combinaison avec deux vérins pneumatiques à double effet 8a et 8b. Ces vérins comportent dans leur région médiane un décrochement de plus faible diamètre 8c et 8d dont la fonction sera explicitée ultérieurement, et ces vérins sont montés en antisymétrique. L'énergie de commande des vérins pneumatiques peut être empruntée au flux de gaz de pilotage; à cet effet, les moyens de commande des vérins comprenent une électrovanne 17 alimentée, à travers un filtre 18, par une faible fraction du flux de gaz générée par le dispositif.

La figure 3b représente une vue en coupe transversale montrant la configuration des trois canaux $C_1$ à $C_3$ de passage des gaz. L'élément rotatif 2, traversé par l'axe de rotation 4, comporte trois canaux $C_1$, $C_2$ et $C_3$ de section sensiblement rectangulaire. Sur cette figure, on a représenté des conduits de gaz 16 disposés entre les tuyères, dont la fonction est de coupler en parallèle deux générateurs de gaz identiques placés de part et d'autre du dispositif de pilotage.

La figure 3c représente, selon une vue en coupe, les détails de réalisation du disque cranté 7. Ce disque comporte, à sa périphérie, six crans d'arrêt 14, tous identiques, régulièrement espacés, qui viennent en appui sur les vérins 8a ou 8b. L'écartement angulaire de ces vérins étant égal à 150°, le disque fournit douze positions d'arrêt parfaitement définies.

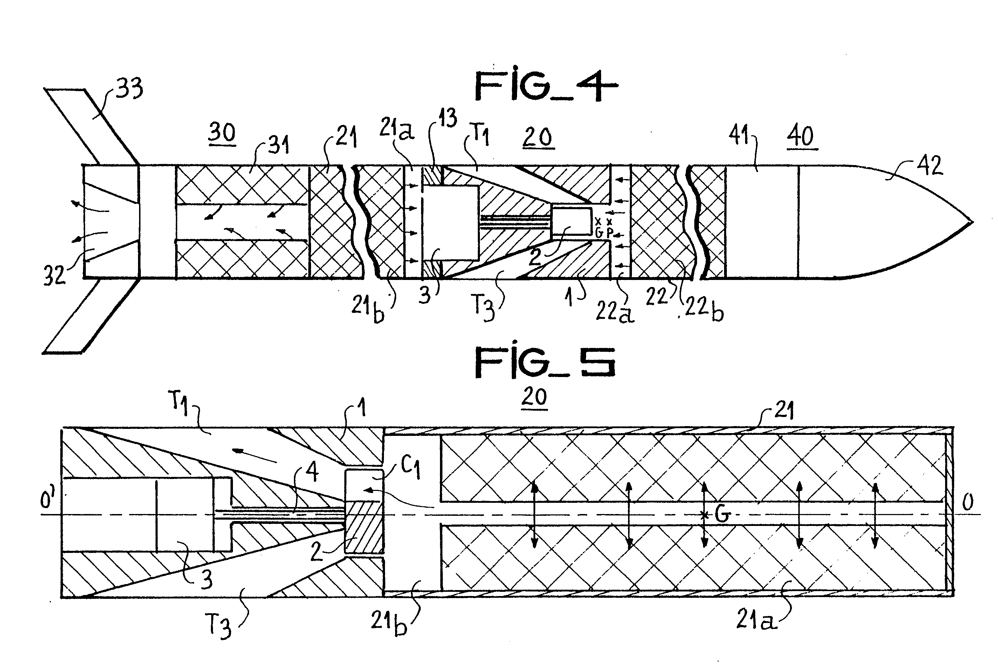

La figure 4 représente, selon une vue en coupe simplifiée, un projectile guidé comprenant un dispositif de pilotage à jets de gaz, tel que décrit ci-dessus. Ce projectile, plus spécifiquement conçu pour le combat Air-Air comprend trois sections principales: une section de pilotage par jets de gaz 20 incluant deux générateurs de gaz 21 et 22, couplés en parallèle par des conduits de gaz situés entre les tuyères et non représentés; une section arrière 30 comprenant un propulseur d'accélération 31 muni de sa tuyère d'éjection 32 et d'un empennage à ailettes 33, déployables ou non, et une section avant 40 comprenant la charge militaire 41 et une ogive 42 renfermant la tête de guidage. Le dispositif de pilotage 20 comprend quatre tuyères d'éjection disposées par couple dans les deux plans orthogonaux de pilotage du projectile; elles sont inclinées vers l'arrière du projectile pour lui fournir une composante de poussée longitudinale destinée à maintenir la vitesse de croisière conférée par le propulseur d'accélération. Les générateurs de gaz 21 et 22, disposés de part et d'autre des tuyères, comprennent chacun une chambre à combustion 21a et 22a et un bloc de propergol solide 21b et 22b muni de ses organes d'ignition. Le centre de poussée P du dispositif de pilotage coïncide sensiblement avec le centre de gravité G du projectile, lequel, du fait de la disposition symétrique des générateurs de gaz, ne subit pas de translation lors de la combustion des blocs de propergol 21b et 22b.

Selon une autre variante de réalisation de ce dispositif de pilotage par éjection de jets de gaz latéraux, l'élément rotatif 2 peut être positionné de façon continue dans le but de varier le débit relatif des gaz traversant deux tuyères adjacentes tout en maintenant un flux de gaz constant. Selon cette variante de réalisation, les moyens de positionnement 3 de l'élément rotatif 2 comprennent un capteur de mesure de la position angulaire de cet élément rotatif et un moteur, avantageusement du type bidirectionnel, physiquement couplé à cet élément rotatif. Ce capteur de mesure de la position angulaire et le moteur d'entraînement de l'élément rotatif constituant les éléments d'un servomécanisme dont le signal de commande est fourni à partir de signaux de guidage disponibles à bord du projectile.

La figure 5 représente une variante de réalisation d'un dispositif de pilotage à jets de gaz pour projectile guidé, comprenant un unique générateur de gaz 21 et un jeu de quatre tuyères fortement inclinées. Selon ce mode de réalisation, le générateur du type à combustion axiale est sensiblement centré sur le centre de gravité G du projectile, et les canaux de passage, tel que $C_1$, du flux de gaz de l'élément rotatif 2 sont parallèles à l'axe longitudinal 0.0' du dispositif.

On voit maintenant plus clairement les avantages que présente un dispositif de pilotage par jets de gaz selon l'invention et, notamment, le fait qu'une faible variation angulaire de l'élément rotatif permet d'aiguiller le flux de gaz de l'une des tuyères à une tuyère adjacente.

L'invention, telle qu'elle vient d'être décrite, n'est pas limitée à la réalisation d'un dispositif de pilotage comprenant quatre tuyères obturables séquentiellement. Elle s'applique aussi à des dispositifs de pilotage comprenant deux, trois et plus de tuyères, en choisissant de façon adéquate le nombre M de canaux de passage des gaz. D'autre part, la section de ces canaux de passage des gaz peut être adaptée à la section des tuyères; elle peut être triangulaire, rectangulaire, comme décrit, mais aussi circulaire ou elliptique. Les moyens de positionnement de l'élément rotatif peuvent être bidirectionnels si l'on utilise des moteurs électriques ou pneumatiques, du type pas-à-pas ou continu.

**Revendications**

1. Dispositif de pilotage par jets de gaz comprenant, un élément annulaire (1) définissant un axe longitudinal (OO'), muni d'un nombre N de tuyères d'éjection ($T_1$ à $T_4$) inclinées par rapport audit axe longitudinal pour fournir conjointement des forces de poussée longitudinale ($F_L$) et transversale ($F_T$), et une source d'énergie fournissant un flux de gaz à l'entrée d'un moyen d'aiguillage alimentant les tuyères d'éjection, caractérisé en ce que le moyen d'aiguillage est un élément rotatif (2), disposé coaxialement dans l'élément annulaire et tournant autour de l'axe longitudinal (OO'), ledit élément rotatif comportant des conduits de gaz ($C_1$ à $C_3$) dont le nombre M est différent du nombre N et des moyens de positionnement (3), ces derniers comprenant un moyen de mise en rotation (2c, 15) de cet élément rotatif par le flux de gaz qui le traverse et un moyen d'arrêt (7) dudit élément rotatif sur N fois M positions stables prédéterminées en sorte que pour chacune d'elles une seule des N tuyères est en communication avec l'un des M conduits, les N-1 autres tuyères étant obturées.

2. Dispositif de pilotage selon la revendication 1, caractérisé en ce que le nombre N de tuyères diffère d'une unité du nombre M des canaux de passage des gaz.

3. Dispositif de pilotage selon la revendication 2, caractérisé en ce que le moyen d'arrêt (7) est un mécanisme à échappement (7 et 8).

4. Dispositif de pilotage selon la revendication 1, caractérisé en ce que les moyens de positionnement (3) de l'élément rotatif (2) comprennent un moteur d'entraînement en rotation et un capteur de mesure de la position angulaire de cet élément rotatif.

5. Dispositif de pilotage selon les revendications 1 à 4, utilisé dans un projectile guidé, caractérisée en ce que le dispositif de pilotage est sensiblement centré sur le centre de gravité du projectile et comporte deux générateurs de gaz (21 et 22) placés de part et d'autre des tuyères d'éjection ($T_1$ à $T_4$) et couplés en parallèle par au moins un conduit longitudinal (16) ménagé entre les tuyères d'éjection.

6. Dispositif en pilotage selon les revendications 1 à 4, utilisé dans un projectile guidé, caractérisé en ce que le dispositif de pilotage est sensiblement centré sur le centre de gravité du projectile et comporte un générateur de gaz (21) et un jeu de quatre tuyères fortement inclinées, les conduits de gaz ($C_1$) étant parallèles à l'axe longitudinal OO' du dispositif.

**Patentansprüche**

1. Gasstrahl-Lenkvorrichtung, versehen mit einem Ringelement (1), welches eine Längsachse (OO') definiert, versehen mit einer Anzahl N von Ausstoßrohren ($T_1$ bis $T_4$), die gegenüber der genannten Längsachse geneigt sind, um gemeinsam eine Längsschubkraft ($F_L$) und eine Querschubkraft ($F_T$) zu liefern, und mit einer Energiequelle, welche eine Gasströmung zum Einlaß einer Umlenkeinrichtung leifert, welche die Ausstoßrohre speist, dadurch gekennzeichnet, daß die Umlenkeinrichtung ein Drehelement (2) ist, welches koaxial in dem Ringelement angeordnet und um die Längsachse (OO') drehbar ist, wobei das genannte Drehelement Gasleitungen ($C_1$ bis $C_3$) umfaßt, deren Anzahl M verschieden von der Anzahl N ist, und eine Positioniereinrichtung (3) umfaßt, welche eine Drehantriebseinrichtung (2c, 15) für dieses Drehelement unter Ausnutzung der dieses durchquerenden Gasströmung sowie eine Einrichtung (7) umfaßt, durch welche des genannte Drehelement in N · M stabilen vorbestimmten Stellungen angehalten werden kann, dergestalt, daß für jede von ihnen nur eines der N Ausstoßrohre in Verbindung mit einer der M Leitungen steht, wobei die N-1 anderen Ausstoßrohre verschlossen sind.

2. Lenkvorrichtung nach Anspruch 1, dadurch gekennzeichnet, daß die Anzahl N von Ausstoßrohre um eine Einheit von der Anzahl M von Gasdurchgangskanälen verschieden ist.

3. Lenkvorrichtung nach Anspruch 2, dadurch gekennzeichnet, daß die Anhalteeinrichtung (7) ein Auslaßmechanismus (7 und 8) ist.

4. Lenkvorrichtung nach Anspruch 1, dadurch gekennzeichnet, daß die Einstelleinrichtung (3) für das Drehelement (2) einen Drehantriebsmotor und einen Stellungsmelder für die Winkelstellung dieses Drehelementes umfaßt.

5. Lenkvorrichtung nach den Ansprüchen 1 bis 4, verwendet in einem gelenkten Projektil, dadurch gekennzeichnet, daß die Lenkvorrichtung im wesentlichen auf den Schwerpunkt des Projektils zentriert ist und zwei Gasgeneratoren (21 und 22) umfaßt, welche auf der einen bzw. anderen Seite der Ausstoßrohre ($T_1$ bis $T_4$) angeordnet sind und durch wenigstens einen Längskanal (16) parallelegeschaltet sind, welcher zwischen den Ausstoßrohren angebracht ist.

6. Lenkvorrichtung nach den Ansprüchen 1 bis 4, verwendet in einem gelenkten Projektil, dadurch gekennzeichnet, daß die Lenkvorrichtung im wesentlichen auf den Schwerpunkt des Projektils zentriert ist und einen Gasgenerator (21) sowie einen Satz von vier stark geneigten Ausstoßrohren umfaßt, wobei die Gasleitungen ($C_1$) parallel zur Längsachse OO' der Vorrichtung sind.

**Claims**

1. Gas jet guiding device comprising an annular element (1) defining a longitudinal axis (OO'), provided with a number N of ejection tubes ($T_1$ to $T_4$) inclined with respect to said longitudinal axis to provide, in conjunction, longitudinal ($F_L$) and transverse ($F_T$) thrust forces, and an energy source providing a gas flow to the input of a distribution means feeding the ejection tubes, characterized in that the distribution means is a rotary element (2) coaxially mounted in the annular element and rotating about the longitudinal axis (OO'), said rotary element comprising gas conduits ($C_1$ to $C_3$) the number M of which is different from the number N, and positioning means (3), the latter comprising a means for rotating (2c, 15) this rotary element by the gas flow whereby it is traversed, and a stopping means (7) for stopping said rotary element in N times M stable predetermined positions in such a manner that for each of them a single one of the N tubes is connected to one of the M conduits, the N-1 remaining tubes being closed.

2. Guiding device according to claim 1, characterized in that the number N of tubes differs by one unit from the number M of gas passage channels.

3. Guiding device according to claim 2, characterized in that the stopping means (7) is an exhaust mechanism (7 and 8).

4. Guiding device according to claim 1, characterized in that the positioning means (3) of the rotary element (2) comprise a rotary drive motor and a detector for measuring the angular position of this rotary element.

5. Guiding device according to claims 1 to 4, used in a guided missile, characterized in that the guiding device is substantially centered on the center of gravity of the missile and comprises two gas generators (21 and 22) located on one and the other side, respectively, of the ejection tubes ($T_1$ to $T_4$) and coupled in parallel by at least one longitudinal conduit (16) arranged between the ejection tubes.

6. Guiding device according to claims 1 to 4, used in a guided missible, characterized in that the guiding device is substantially centered on the center of gravity of the missile and comprises a gas generator (21) and a set of four greatly inclined tubes, the gas conduits ($T_1$ being parallel to the longitudinal axis (OO') of the device.

FIG_1-b

FIG_1-a

# FIG_1-c

# FIG_1-d

| $T_i$ | $C_i$ | $\theta$ | $T_i$ | $C_i$ |
|---|---|---|---|---|
| $T_1$ | $C_1$ | 0 | $C_1$ | $T_1$ |
| $T_2$ | $C_2$ | 30 | $C_3$ | $T_4$ |
| $T_3$ | $C_3$ | 60 | $C_2$ | $T_3$ |
| $T_4$ | $C_1$ | 90 | $C_1$ | $T_2$ |
| $T_1$ | $C_2$ | 120 | $C_3$ | $T_1$ |
| $T_2$ | $C_3$ | 150 | $C_2$ | $T_4$ |
| $T_3$ | $C_1$ | 180 | $C_1$ | $T_3$ |
| $T_4$ | $C_2$ | 210 | $C_3$ | $T_2$ |
| $T_1$ | $C_3$ | 240 | $C_2$ | $T_1$ |
| $T_2$ | $C_1$ | 270 | $C_1$ | $T_4$ |
| $T_3$ | $C_2$ | 300 | $C_3$ | $T_3$ |
| $T_4$ | $C_3$ | 330 | $C_2$ | $T_2$ |

0 063 979

FIG_2-a

0 063 979

FIG_2·b

β

60°

14

11

7

8d

8c

150°

FIG_2·c

C₃

C₂

2b

2c

2

2

C₁

2a

# FIG_3-a

0 063 979

## FIG_3·b

## FIG_3·c

**FIG_4**

20

**FIG_5**

20